# NOUVEAU FASCICULE DE BREVET EUROPEEN

(11) **EP 1 399 032 B2**
(45) Date de publication et mention de la décision concernant l'opposition: **22.08.2012**
(45) Mention de la délivrance du brevet: 28.09.2005
(21) Numéro de dépôt: 02755079.7
(22) Date de dépôt: 21.06.2002
(51) Int. Cl.: A23G 9/30, A23G 3/26, A23G 3/00

(54) **PROCEDE DE DRAGEIFICATION DURE AMELIORE**
VERBESSERTES HARTDRAGIERVERFAHREN
IMPROVED HARD SUGAR COATING METHOD

(30) Priorité: 25.06.2001 FR 0108362
(43) Date de publication de la demande: 24.03.2004
(73) Titulaire: Roquette Frères, 62136 Lestrem (FR)
(72) Inventeur: ORTIZ DE ZARATTE, Dominique, f-59660 Merville (FR); RIBADEAU-DUMAS, Guillaume, F-59237 Verlinghem (FR)
(74) Mandataire: Boulinguiez, Didier
(86) Numéro de dépôt international: PCT/FR2002/002164
(87) Numéro de publication internationale: WO 2003/000068

(56) Documents cités:
- EP-A- 0 273 000
- EP-A- 0 813 817
- EP-A1- 0 491 953
- EP-A1- 0 664 960
- US-A- 4 238 510
- US-A- 4 792 453
- US-A- 4 840 797
- US-A- 5 248 508
- US-A- 5 270 061
- US-A- 5 376 389
- US-A- 5 478 593
- US-A- 5 527 542
- US-B1- 6 180 143
- DATABASE WPI Section Ch, Week 199502 Derwent Publications Ltd., London, GB; Class B07, AN 1995-009017 XP002190668 & JP 06 292511 A (MEIJI SEIKA KAISHA), 21 octobre 1994 (1994-10-21)

## Description

L'invention se rapporte à un procédé amélioré de dragéification dure et aux produits dragéifiés ainsi obtenus.

Plus précisément, l'invention a pour objet un procédé de dragéification dure au maltitol ou à l'isomalt permettant de réduire la fragilité des produits dragéifiés.

La dragéification dure est une opération unitaire employée dans bon nombre de domaines et notamment en confiserie ou en pharmacie. Elle peut concerner également l'industrie des additifs que sont les arômes, les édulcorants, les vitamines, les enzymes, les acides et les produits à base de plantes. Cette opération consiste à créer un revêtement dur à la surface de produits solides ou pulvérulents, afin de les protéger pour diverses raisons ou bien afin de les rendre attractifs visuellement ou gustativement.

La dragéification dure vise à obtenir une couche croustillante et sucrée, toujours très appréciée dans le cas de confiseries comme les chewing-gums.

Elle nécessite toujours l'utilisation d'un sirop contenant des matières cristallisables. Le revêtement dur et cristallin s'obtient par application de ce sirop et évaporation de l'eau apportée par celui-ci. Cette application doit être répétée un très grand nombre de fois de manière à obtenir le taux de grossissage voulu.

Parmi les différents types de dragéification sans sucre mettant en oeuvre des polyols, la dragéification dure au maltitol ou à l'isomalt sont les plus satisfaisantes en termes de dureté et de croustillance notamment, et permettent d'obtenir des produits tout à fait similaires à ceux obtenus avec du pur saccharose.

On peut citer en particulier le procédé de dragéification décrit dans le brevet EP-B1-0.201.412 dont la Demanderesse est titulaire.

Cette technique présente toutefois, malgré les améliorations qui lui ont été apportées comme notamment celles décrites dans le brevet EP-B1-0.625.311 dont la demanderesse est également titulaire, l'inconvénient de conduire à des produits dragéifiés sensibles à la casse. C'est le cas en particulier des chewing-gums sous forme de coussinets dragéifiés, pour lesquels on observe après manipulation des produits un phénomène de casse au niveau des coins des coussinets.

A la connaissance de la Demanderesse, il n'existe pas à l'heure actuelle de solutions techniquement viables permettant de réduire la casse de produits dragéifiés au maltitol ou à l'isomalt.

Désireuse d'améliorer l'état de la technique, la Demanderesse s'est donc attachée à pallier ce manque et c'est après de longs travaux de recherche qu'elle a constaté que l'on pouvait, de façon surprenante et inattendue obtenir des revêtements durs au maltitol ou à l'isomalt particulièrement améliorés en ce qui concerne leur résistance à la casse, dès lors que l'on substitue une partie de l'agent liant couramment utilisé dans le sirop de dragéification par du sorbitol introduit sous forme de sirop ou sous forme de poudre. On entend par agent liant au sens de la présente invention les composés tels que la gomme arabique, la gomme talha, la gélatine, les amidons et celluloses modifiés, les dextrines, maltodextrines, maltodextrines branchées et hydrolysats d'amidon hydrogénés que l'homme de l'art a coutume d'utiliser dans les sirops de dragéification.

L'invention a donc pour objet un procédé de dragéification dure selon la revendication 1 comprenant une étape d'application d'un sirop de dragéification composé de maltitol ou d'isomalt et d'au moins un liant, caractérisé en ce qu'une partie de la matière sèche dudit liant est substituée par un sirop ou une poudre de sorbitol de manière à réduire la fragilité des produits ainsi dragéifiés.

Selon un mode général de réalisation de l'invention, le procédé consiste à humidifier de façon homogène la surface des produits à dragéifier en mouvement dans une turbine de dragéification à l'aide dudit sirop de dragéification au maltitol ou à l'isomalt.

Le procédé selon l'invention consiste à ajouter ensuite sous forme pulvérulente une quantité de poudre de maltitol ou d'isomalt de haute pureté, de préférence supérieure à 90% en poids, et plus préférentiellement encore supérieure à 95% en poids. Cette étape de répartition et l'étape d'application peuvent être menées dans un ordre quelconque.

Après répartition de la poudre et éventuellement séchage de l'ensemble, un nouveau cycle humidification-apport de poudre peut être réalisé. Le procédé nécessite au moins une, mais de préférence au moins deux applications, sous forme pulvérulente, d'une poudre de maltitol ou d'isomalt de haute pureté. Ces applications peuvent être réalisées lors d'un même cycle ou bien lors de cycles différents sachant qu'un cycle est défini dans la présente invention comme ne comprenant qu'une seule application du sirop de maltitol ou d'isomalt.

Il est à noter que les produits à dragéifier peuvent éventuellement être gommés préalablement selon les techniques classiques connues de l'homme du métier.

Une autre variante de l'invention consiste à réaliser une dragéification multicouches, mettant en oeuvre plusieurs polyols, la substitution du liant dans ce cas concernera la couche de dragéification comprenant le maltitol ou l'isomalt.

Bien entendu, il est possible de procéder en final à un cirage classique en vue d'améliorer l'aspect des produits. On utilise dans ce cas par exemple des corps gras, des laques ou des cires.

En ce qui concerne le maltitol ou l'isomalt entrant dans la constitution du sirop de dragéification, ceux-ci sont présents à hauteur d'au moins 80%, de préférence au moins 88% en poids par rapport à la matière sèche dudit sirop de dragéification.

En ce qui concerne la quantité de sirop de sorbitol ou de sorbitol poudre utilisée en substitution du liant, elle représente 1 à 5% en poids sec de la matière sèche du ou des sirops de dragéification.

Tout sirop de sorbitol du commerce convient bien, on pourra notamment utiliser directement les produits commercialisés sous la marque NEOSORB® 70/05, 70/02, 70/70. Dans tous les cas, ledit sirop peut être préparé à partir de poudre. On préfère généralement que ce sirop ait une matière sèche d'environ 70%.

Tout sorbitol poudre du commerce convient également.

De bons résultats ont également été obtenus avec d'autres sirops de monosaccharides hydrogénés de poids moléculaire inférieur ou égal à 182 g/mole comme par exemple le mannitol, le xylitol, l'érythritol, la glycérine.

En ce qui concerne le liant, celui-ci représente de préférence jusqu'à 15% en poids sec de la matière sèche du sirop de dragéification. Ledit liant est choisi dans le groupe constitué par la gomme arabique, la gomme talha, la gélatine, les amidons et celluloses modifiés, les dextrines, maltodextrines, maltodextrines branchées et hydrolysats d'amidon hydrogénés, seuls ou en mélange entre eux.

Le sirop de dragéification pourra également contenir des pigments tels que le carbonate de calcium, l'oxyde de titane, ou un colorant alimentaire, ainsi que des édulcorants intenses tels que l'aspartame, l'acesulfame K, la saccharine, le sucralose, l'alitame, le néotame, la néohespéridine, la thaumatine, le cyclamate de sodium ou de calcium.

Le procédé conforme à l'invention permet d'enrober tous types de produits, comme notamment des produits alimentaires tels que des confiseries, chewing-gums, bubble gums, comprimés, lozenges, articles gélifiés, pâtes à mâcher, bonbons durs, produits chocolatés, des fruits secs tels que amandes, noisettes, des produits pharmaceutiques ou vétérinaires comme les pilules, tablettes, produits pour animaux, des produits diététiques tels que les granulés de plantes, des semences ou des graines, des poudres d'engrais agglomérées, des additifs à base d'enzymes ou de microorganismes comme les levures, des tablettes détergentes, des vitamines, des arômes, parfums, acides, édulcorants ou principes actifs divers.

La mise en oeuvre de l'invention telle que décrite ci avant permet de manière simple d'obtenir des produits dragéifiés particulièrement résistants à la casse, avec des temps de dragéification relativement courts pour un taux de grossissage d'environ 30%.

L'invention sera mieux comprise à l'aide des exemples suivants qui se veulent illustratifs et non limitatifs.

### EXEMPLE 1 : Comparaison du procédé conforme à l'invention avec des procédés de l'art antérieur

Des chewing-gums sans sucre ayant une forme en coussinets de 2 centimètres de longueur pour 1 centimètre de largeur environ sont dragéifiés selon les procédés décrits dans les brevets EP-B1 0.201.412 (Témoin 1) et EP-B1-0.625.311 (Témoin 2).

Les mêmes produits sont ensuite dragéifiés selon les mêmes procédés, mais en substituant le liant selon l'invention (Essais 1 et 2).

On utilise pour les dragéifications :
- un sirop de dragéification à 70% de matière sèche dont la matière sèche contient 93% de maltitol sur sec, 6% de gomme arabique et 1% d'oxyde de titane. (témoins)
- le même sirop dans lequel on substitue 1.5% de la gomme arabique par 1,5% de matière sèche d'un sirop de sorbitol NEOSORB®70/02. La teneur en gomme arabique devient donc 4,5% sur sec. (essais)
- du maltitol poudre (MALTISORB®P35) pour le témoin et les essais 1 et 2.

### ESSAI ET TÉMOIN 1

On place 50 kg de centres à dragéifier dans une drageuse de type DRIACOATER 1200 en rotation, et on pulvérise le sirop de dragéification à 75°C à raison de 12g/kg de centres. On laisse répartir durant 30 secondes, puis on ajoute 10g de MALTISORB®P35 par kg de centres, on laisse répartir 30 secondes, puis on sèche pendant 3 minutes avec de l'air à 27°C. On répète l'addition de sirop en augmentant progressivement la quantité de sirop jusqu'à 16g/kg de centres ainsi que les étapes de répartition (30 secondes à 2 minutes) et séchage (1,5 à 4 minutes) jusqu'à obtention d'un taux d'enrobage d'environ 30%. On ajoute 8g de MALTISORB®P35 après répartition de la 2^{ème}, 3^{ème}, 4^{ème} et 5^{ème} addition de sirop. On laisse répartir cette poudre 30 secondes avant séchage.

On procède ensuite à un cirage à la cire de carnauba.

### ESSAI ET TÉMOIN 2

On pulvérise le sirop de dragéification à 70% de matière sèche et à 75°C sur les centres en rotation dans la turbine DRIACOATER 1200 à raison de 14 à 16 g par kg de centres en début de cycle, de 18 à 22 g par kg en milieu de cycle et de 8 à 16g par kg en fin de cycle.

On laisse répartir 30 secondes puis on saupoudre de 6 à 7g de maltitol poudre par kg de centres en début de cycle, de 2 à 4g de maltitol par kg de centres en milieu de cycle, de 0g en fin de cycle et on laisse répartir pendant 30 secondes en début de cycle ou 30 à 90 secondes en milieu de cycle, sans procéder à un séchage par flux d'air à tous les cycles. On reproduit ces opérations jusqu'à un taux de grossissage d'environ 30%. On procède enfin à un cirage à la cire de carnauba.

### ÉVALUATION DE LA FRAGILITÉ DES PRODUITS FINIS AU MOYEN D'UN TEST DE CASSE

Ce test consiste à faire chuter 50 chewing-gums dragéifiés d'une hauteur de 1 mètre sur une surface métallique et à dénombrer les coins cassés.
Les résultats sont exprimés en nombre de coins cassés à l'issue du test pour un total de 200 coins, après 24 ou 96 heures de stockage des chewing-gums dragéifiés à 50% d'humidité relative et 20°C.

| | TÉMOIN 1 | **ESSAI 1** | TÉMOIN 2 | **ESSAI 2** |
|---|---|---|---|---|
| Après 24h | 20 | **7** | 25 | **6** |
| Après 96h | 51 | **20** | 42 | **8** |

Ces résultats illustrent bien la diminution notable de la fragilité des produits selon l'invention (ESSAIS). Les produits obtenus sont plus lisses que les témoins, croustillants et brillants.

## Revendications

1. Procédé de dragéification dure comprenant une étape d'application sur la surface d'un produit à dragéifier d'un sirop de dragéification composé de maltitol ou d'isomalt et d'au moins un liant, le liant étant choisi dans le groupe constitué par la gomme arabique, la gomme talha, la gélatine, les celluloses et amidons modifiés, les dextrines, les maltodextrines et les maltodextrines branchées, seuls ou en mélanges entre eux, ledit sirop de dragéification comprenant par rapport à sa matière sèche soluble au moins 80%, de préférence au moins 88% en poids de maltitol ou d'isomalt, ledit procédé comprenant, en outre une étape de répartition d'une poudre de maltitol ou d'isomalt de pureté supérieure à 90%, de préférence supérieure à 95% en poids, lesdites étapes d'application et de répartition étant menées dans un ordre quelconque **caractérisé en ce qu**'une partie de la matière sèche dudit liant est substituée par un sirop ou une poudre de sorbitol, de manière à réduire la fragilité des produits dragéifiés, ledit sirop de dragéification comprenant de 1 à 5% en poids sec d'un sirop ou d'une poudre de sorbitol.

2. Procédé de dragéification dure selon la revendication 1, **caractérisé en ce que** ledit liant représente jusqu'à 15% en poids sec de la matière sèche dudit sirop de dragéification.

3. Procédé de dragéification dure selon la revendication 1 ou 2, **caractérisé en ce que** le produit à dragéifier est un produit alimentaire, vétérinaire ou pharmaceutique, diététique, une semence ou une graine, une poudre d'engrais, ou encore un additif à base d'enzymes, de microorganismes, de vitamines, d'arômes, de parfums, d'acides, d'édulcorants ou de principes actifs.

## Claims

1. A method for hard coating comprising a step of applying on the surface of a product that is to be coated, a coating syrup composed of maltitol or isomalt and at least one binder, the binder being chosen from the group consisting of gum arabic, gum talha, gelatin, modified celluloses and starches, dextrins, maltodextrins and branched maltodextrins, alone or as a mixture with each other, said coating syrup comprising, relative to its soluble dry matter content, at least 80%, preferably at least 88% by weight of maltitol or isomalt, said process comprising, in addition, a step of distributing a maltitol or isomalt powder of purity greater than 90%, preferably greater than 95% by weight, said application and distribution steps being carried out in any order, **characterized in that** some of the dry matter content of said binder is replaced by a sorbitol syrup or powder so as to reduce the brittleness of the products thus coated, said coating syrup comprising 1 to 5% by dry weight of the dry matter content of a sorbitol syrup or of a sorbitol powder.

2. The method as claimed in claim 1, **characterized in that** said binder represents up to 15% by dry weight of the dry matter content of said coating syrup.

3. The method as claimed in claim 1 or 2, **characterized in that** the preduct for coating is a food, veterinary or pharmaceutical product, a dietetic product, a seed or a seed grain, a fertilizer powder or an additive based on enzymes, microorganisms, vitamins, flavorings, pertumes, acids, sweeteners or active ingredients.

## Patentansprüche

1. Verfahren zum Hartdragieren, umfassend einen Schritt der Anwendung auf die Oberfläche eines zu dragierenden Produkts, eines Dragiersirups, der aus Maltitol oder Isomalt und mindestens einem Bindemittel zusammengesetzt ist, wobei das Bindemittel ausgewählt wird aus der Gruppe besthend aus Gummi arabikum, Talhagummi, Gelatine, modifizierter Cellulose und modifizierter Stärke, Dextrinen, Maltodextrinen und verzweigten Maltodextrinen, allein oder in Mischung untereinander, der besagte Dragiersirup, im Verhältnis zu seinem löslichen Trockenmaterial, mindestens 80 Gewichts-%, vorzugsweise mindestens 88 Gewichts-% Maltitol oder Isomalt umfasst, wobei das besagte Verfahren ferner einen Schritt der Verteilung eines Pulvers von Maltitol oder Isomalt von einer Reinheit von mehr als 90 Gewichts-%, vorzugsweise von mehr als 95 Gewichts-%, umfasst, wobei die Schritte der Anwendung und der Verteilung in einer beliebigen Reihenfolge verknüpft sind, **dadurch gekennzeichnet, dass** ein Teil des Trockenmaterials des besagten Bindemittels ersetzt wird durch einen Sirup oder ein Pulver von Sorbitol, so dass die Brüchigkeit des so dragierten Produkts verringert wird, wobei der besagte Dragiersirup 1 bis 5% Trockengewicht eines Sirups oder eines Pulvers von Sorbitol umfasst.

2. Verfahren gemäß Anspruch 1, **dadurch gekennzeichnet, dass** das Bindemittel bis 15% Trockengewicht des Trockenmaterials des besagten Dragiersirups darstellt.

3. Verfahren gemäß Anspruch 1 oder 2, **dadurch gekennzeichnet, dass** das zu dragierende Produkt ein Nahrungs-, ein Veterinär oder ein pharmazeutisches Produkt, ein Diätprodukt ein Saatgut oder ein Kom, ein Düngemittelpulver, oder auch ein Additiv auf der Basis von Enzymen, Mikroorganismen, Vitaminen, Aromen, Parfüms, Säuren, Süßstoffen oder Wirkstoffen ist.
